Europäisches Patentamt

European Patent Office

Office européen des brevets

(19)

(11) EP 0 556 146 B1

(12) FASCICULE DE BREVET EUROPEEN

(45) Date de publication et mention
de la délivrance du brevet:
**08.01.1997 Bulletin 1997/02**

(51) Int Cl.⁶: **H04B 7/26**, H04Q 7/36

(21) Numéro de dépôt: **93460007.3**

(22) Date de dépôt: **12.02.1993**

(54) **Procédé d'implantation de l'infrastructure d'un réseau cellulaire de communication**

Einrichtungsverfahren für Zellularkommunikationsnetzinfrastruktur

Implantation method for cellular communication network infrastructure

(84) Etats contractants désignés:
**DE GB**

(30) Priorité: **14.02.1992 FR 9201904**

(43) Date de publication de la demande:
**18.08.1993 Bulletin 1993/33**

(73) Titulaire: **FRANCE TELECOM**
**75015 Paris (FR)**

(72) Inventeur: **Cohen, Robert**
**F-75016 Paris (FR)**

(74) Mandataire: **Vidon, Patrice**
**Cabinet Patrice Vidon,**
**Immeuble Germanium,**
**80, Avenue des Buttes-de-Coesmes**
**35700 Rennes (FR)**

(56) Documents cités:
**WO-A-90/10342**

• **40TH IEEE VEHICULAR TECHNOLOGY CONFERENCE 6 Mai 1990, ORLANDO (US) pages 638 - 645 , XP204186 H. PANZER ET AL 'ADAPTIVE RESOURCE ALLOCATION IN METROPOLITAN AREA CELLULAR MOBILE RADIO SYSTEMS'**
• **IEEE JOURNAL ON SELECTED AREAS IN COMMUNICATION vol. 8, no. 4, Mai 1990, NEW YORK US pages 603 - 612 , XP204650 H.O. BECA ET AL 'A Design Concept for Reconfigurable Mobile Radio Networks with Slow Frequency-Hopping Signalling'**
• **ERICSSON REVIEW vol. 67, no. 2, 1990, STOCKHOLM SE pages 84 - 91 , XP165457 G. JISMALM ET AL 'Cell Planning - Products and Services'**
• **41TH IEEE VEHICULAR TECHNOLOGY CONFERENCE 19 Mai 1991, ST. LOUIS (US) pages 505 - 510 , XP260230 O. GRIMLUND ET AL 'HANDOFF STRATEGIES IN MICROCELLULAR SYSTEMS'**

## Description

Le domaine de l'invention est celui des systèmes de radio-communication cellulaires pour les communications avec les mobiles. Plus précisément, l'invention concerne l'implantation de l'infrastructure de réseaux cellulaires, c'est-à-dire, en particulier, la détermination de l'emplacement géographique des émetteurs et de leurs caractéristiques techniques, de façon à répondre de façon optimisée à un certain nombre de contraintes (couverture géographique, débit, ...).

Le procédé de l'invention s'applique à tout type de réseaux cellulaires. Un domaine d'application privilégié est la radiotéléphonie avec les mobiles, qu'il s'agisse de systèmes analogiques (par exemple le système Radiocom 2000 Haute Densité (marque déposée)) ou numériques (par exemple le système européen GSM (Groupe Spécial Mobile)).

Dans une version simplifiée, l'invention peut également s'appliquer aux systèmes de radio-diffusion numérique, tels que le DAB (Digital Audio Broadcasting (diffusion audionumérique)).

Par la suite, et sans que cela soit limitatif, on considérera essentiellement le cas du radiotéléphone. En effet, une solution efficace au problème du nombre croissant d'abonnés du radiotéléphone est l'introduction d'un système de radio communication avec les mobiles à architecture cellulaire.

Dans ces systèmes, le territoire à couvrir est découpé en zones ou secteurs appelés cellules.

Chaque cellule est desservie par une station de base (émettrice, réceptrice) assurant la double fonction de couverture radio-électrique et d'écoulement du trafic engendré par les mobiles qui lui sont radio-électriquement rattachés.

Deux cellules contiguës utilisent des fréquences différentes, mais la fréquence attribuée dans une cellule peut être réutilisée plus loin, à condition de respecter des règles de réutilisation propres au système, assurant une certaine protection aux interférences. L'ensemble des cellules connexes se partageant la totalité des fréquences allouées au réseau est appelé motif cellulaire.

C'est l'intérêt des réseaux cellulaires de permettre la réutilisation des fréquences, par translation du motif cellulaire. En contre-partie, le suivi des mobiles devient nécessaire : il faut être capable de localiser la cellule visitée par un mobile ou, plus généralement, le groupe de cellules (zone de localisation) auquel cette cellule appartient, pour pouvoir transférer à ce mobile une communication, mais aussi pouvoir maintenir les communications en cours pendant un changement de cellule (transfert automatique intercellulaire (TAI), ou "hand-over" en anglais).

Si jusqu'à présent les dimensions des réseaux permettaient une approche pragmatique de certaines questions techniques, leur complexité actuelle rend indispensable la réalisation d'un outil d'aide à l'ingénierie des réseaux cellulaires.

La planification des réseaux mobiles cellulaires consiste principalement à :

- décider des lieux d'implantation des stations émettrices en assurant une couverture convenable à partir de ces sites,
- définir le motif cellulaire, et répartir les fréquences,
- dimensionner les cellules en voies de trafic et de signalisation,
- définir les paramètres systèmes tels que les zones de localisation, déterminer les paramètres des algorithmes utilisés dans le réseaux (pour le transfert automatique intercellulaire par exemple),

en tenant notamment compte des critères d'optimisation suivants :

- ressources radio-électriques (Erlang/MHz/km2),
- coûts d'infrastructure (dimensionnement des canaux de trafic et de signalisation, taille des cellules,...).

On connaît déjà des procédures de planification de réseaux cellulaires, telles que proposées par les systèmes GRAND (marque déposée) de PHILIPS (marque déposée), ou CELLNET (marque déposée) de BRITISH TELECOM (marque déposée).

Ces procédures sont essentiellement orientées vers des planifications radioélectriques. Un modèle probabiliste de propagation radioélectrique est utilisé dans une région à planifier. Les valeurs des paramètres de ce modèle sont obtenues par la méthode classique de régression statistique à partir de mesures de champ. On sait alors déterminer pour ce modèle la couverture radioélectrique du réseau.

Certains outils prennent également en compte les aspects trafic. Toutefois, cela n'est alors fait que de façon statique : ils ne traitent que de l'intégration de distribution de trafic mesuré. Ceci suppose que le réseau est déjà opérationnel, et ne permet que des modifications de second niveau : si une station de base se voit chargée d'écouler un trafic trop important pour sa configuration il est nécessaire de modifier l'ingénierie localement. Le document WO-A-90 10342 décrit un tel outil.

Par ailleurs, dans ces outils existants, la procédure de mise au point suppose toujours que les couvertures obtenues sont connexes et/ou convexes et donc ne présentent pas à l'usager d'aspect heurté. Or l'expérience montre que justement, notamment en milieu urbain, les couvertures s'accompagnent de trous et de résurgences préjudiciables à la qualité de service.

L'invention a notamment pour objectif de pallier ces inconvénients de l'état de la technique.

Notamment, un objectif de l'invention est de fournir un procédé d'implantation de l'infrastructure d'un réseau cellulaire permettant l'optimisation des sites émetteurs de plusieurs points de vue, et en particulier :

- efficacité spectrale,
- densité de trafic de phonie et de signalisation du réseau,

et par conséquent d'optimiser les coûts d'infrastructure.

Un autre objectif de l'invention est de fournir un tel procédé pouvant être utilisé aussi bien pour la réalisation complète d'un réseau cellulaire, plusieurs options simulations pouvant alors éventuellement être comparées, pour l'évolution d'un réseau déjà en place (augmentation de la capacité et/ou de la couverture géographique), ou pour le suivi en temps réel ou différé d'un réseau existant.

L'invention a également pour objectif de fournir un tel procédé qui s'applique à tout système cellulaire, que la diffusion soit analogique ou numérique, qu'il s'agisse de diffusion monodirectionnelle ou de radiotéléphonie (bidirectionnelle).

Un autre objectif particulier est encore de fournir un tel procédé optimisant le partage et l'utilisation de la ressource globale de transmission.

Un autre objectif de l'invention est de fournir un tel procédé, qui assure également l'optimisation des algorithmes de transfert automatique intercellulaire et de resélection (qui seront décrits plus en détail par la suite) mis en oeuvre par le système de gestion du réseau.

Ces objectifs, ainsi que d'autres qui apparaîtront par la suite, sont atteints selon l'invention, à l'aide d'un procédé d'implantation de l'infrastructure d'un réseau cellulaire de communication selon la revendication 1.

Les procédés d'implantation connus déterminent une couverture radio-électrique statique. Toutefois, on sait que le format effectif des cellules ne correspond pas, dans la réalité, au format ainsi calculé.

En effet, s'il existe une zone de recouvrement entre deux cellules contigües, un mobile peut être affecté à l'une ou l'autre des cellules. Généralement, un mobile reste affecté à la cellule qui le gère alors même qu'il a géographiquement quitté la zone de meilleur champ que présente cette cellule. Ainsi, du point de vue du mobile, la cellule qu'il quitte est plus grande que la cellule déterminée classiquement (le mobile "tire" la couverture), alors que la cellule dans laquelle il entre est plus petite.

L'invention propose donc une approche nouvelle et originale du problème, consistant à considérer la couverture du réseau telle qu'elle est vue par un mobile (aspect dynamique) et non plus telle qu'elle est vue des émetteurs (par émetteur, on entend soit les simples émetteurs, dans le cas de la radiodiffusion par exemple, soit les émetteurs/récepteurs, dans le cas de la radiotéléphonie par exemple).

On comprend aisément que cette nouvelle approche est particulièrement efficace, car elle permet de se rapprocher fortement de la réalité, notamment lorsque le réseau routier correspond avec une zone de recouvrement.

Dans un mode de réalisation avantageux de l'invention, le procédé comprend les étapes de :

- détermination de la couverture radio-électrique d'au moins certaines desdites cellules de diffusion ;
- détermination du trafic, c'est-à-dire des échanges d'information, dans au moins certaines desdites cellules de diffusion, prenant en compte ladite méthode d'attribution de cellules.

Ainsi, à une première étape classique, on ajoute une étape complémentaire prenant en compte le trafic et la mobilité. On peut ainsi déterminer de façon très précise les caractéristiques optimales de chaque cellule.

Avantageusement, le procédé comprend également une étape complémentaire de détermination des zones de localisation, une zone de localisation comprenant au moins deux cellules.

L'utilisation de zones de localisation permet notamment de minimiser le trafic dû aux mises à jour de localisation, en fonction du déplacement des mobiles (on ne tient compte que des changements de zones, non des changements de cellules).

De façon avantageuse, ladite étape de détermination des zones de localisation détermine lesdites zones de localisation de façon à minimiser le trafic de signalisation.

Préférentiellement, ladite méthode d'attribution de cellules comprend les deux opérations suivantes :

- transfert automatique intercellulaire, pour les mobiles en cours de communication et changeant de cellule de diffusion ;
- resélection d'une cellule, pour les mobiles passant d'un état d'arrêt à un état de veille ou d'un état de veille à un état de communication, de façon à pouvoir émettre ou recevoir des informations. La cellule resélectionnée est en général la cellule offrant les meilleures conditions de réception.

Classiquement, ce sont en effet ces deux algorithmes qui déterminent les besoins de chaque cellule.

De façon avantageuse, ladite étape de détermination du trafic peut prendre en compte, pour chaque mobile, au moins certaines des informations suivantes :

- point de départ dudit mobile ;
- vitesse dudit mobile ;
- loi de déplacement dudit mobile ;
- direction dudit mobile ;
- état du mobile (en communication, en veille, hors veille (ou en sommeil)).

Ainsi, il est possible de déterminer d'une façon très proche de la réalité les recours nécessaires aux algorithmes.

Préférentiellement, ladite étape de détermination du trafic prend en compte la position du mobile sur ou hors d'une voie de circulation, et/ou l'importance de ladite voie de circulation.

Il est clair, en effet, que la probabilité qu'un mobile soit sur une route importante est plus grande que celle d'être sur une route secondaire, ou plus encore, hors route. En prenant en compte ce critère, le procédé de l'invention détermine donc l'importance et l'influence du trafic de façon plus exacte.

De même il est avantageux que ladite étape de détermination du trafic prend en compte une information de caractérisation géographique de la zone où s'effectue chacun desdits échanges de données.

En effet, les conditions de propagation sont très différentes suivant que le lieu considéré est en rase campagne, en milieu boisé ou en milieu urbanisé

A partir de ces informations, le procédé de l'invention peut mettre avantageusement en oeuvre au moins un modèle statistique de déplacement desdits mobiles dans lesdites cellules.

Plusieurs modèles peuvent être testés en parallèle, seul le plus proche de la réalité étant retenue.

Préférentiellement, le procédé comprend une étape de mesures de trafic, informant ladite étape de détermination du trafic.

Cela permet de préciser les caractéristiques du ou des modèles statistiques, et, le cas échéant, de sélectionner le meilleur.

De façon avantageuse, le procédé de l'invention comprend également une étape de détermination des accidents de couverture dudit réseau.

On sait en effet qu'il n'est pas rare qu'une ou plusieurs zones de non réception apparaissent dans la couverture globale d'une cellule.

Dans ce cas, il est avantageux que le procédé comprenne une étape de modification de ladite méthode d'attribution de cellules, informée par ladite étape de détermination des accidents de couverture, de façon que lesdits accidents de couverture soient pris en compte lors de l'attribution de cellules.

En d'autres termes, il y a selon l'invention interaction entre la détermination de l'infrastructure du réseau, qui tient compte des algorithmes de transfert et de sélection, et ces algorithmes, qui sont optimisés en fonction de l'infrastructure du réseau.

On peut ainsi supprimer les zones de non-couverture radio-électrique, ou les zones où les transferts intercellulaires sont très fréquents.

De façon avantageuse, le procédé comprend également une étape de sélection d'un algorithme de transfert automatique intercellulaire, parmi au moins deux algorithmes de transfert automatique intercellulaire.

Préférentiellement, ladite étape de détermination de la couverture radioélectrique est précédée d'une étape de détermination d'un modèle de propagation, prenant en compte des valeurs de champ radio-électrique mesurées et/ou estimées par calcul.

Par exemple, ladite étape de détermination de la couverture radio-électrique comprend au moins une des opérations suivantes :

- mesures de champ radio-électrique ;
- interpolation de la couverture radio-électrique à partir desdites mesures, sur les zones géographiques proches desdites mesures ;
- extrapolation de ladite couverture radio-électrique à partir desdites mesures ;
- choix d'un modèle de propagation parmi au moins deux modèles disponibles,

et une opération de détermination de la couverture radio-électrique globale, à partir desdites mesures et/ou des interpolations et/ou desdites extrapolations réalisées et/ou du modèle de propagation choisi.

Il est préférable que ladite opération de mesures concerne au moins 30 % de ladite couverture globale.

De façon avantageuse, ladite étape de détermination d'un modèle de propagation pondère lesdites mesures, en fonction de leur représentativité au sens de la couverture radio-électrique.

Dans un mode de réalisation préférentiel de l'invention, lesdites étapes d'interpolation et d'extrapolation comprennent les étapes suivantes :

- classement des mesures en au moins deux groupes ;
- application d'un modèle d'interpolation distinct pour chacun desdits groupes.

Avantageusement, le procédé de l'invention comprend également une étape de modification d'au moins une des caractéristiques desdits émetteurs.

Notamment, ces caractéristiques peuvent appartenir au groupe comprenant:

- diagramme d'antenne ;
- puissance ;
- azimut ;
- nombre et/ou valeur des fréquences d'émission ;
- nombre de canaux de service ;
- nombre de canaux de communication.

De façon préférentielle, le procédé prend en compte au moins une des contraintes appartenant au groupe comprenant :

- situation prédéfinie d'un émetteur ;
- relief ;
- forme prédéfinie d'au moins une cellule.

Avantageusement, il comprend encore une étape d'affectation d'une ressource globale de transmission à chacune desdites cellules et/ou de découpage de la ressource globale de transmission affectée à chacune desdites cellules en canaux de signalisation et en canaux de trafic, pouvant par exemple tenir compte d'au moins une des contraintes appartenant au groupe comprenant la probabilité d'attente d'un canal disponible et la probabilité de blocage de ladite ressource.

Préférentiellement, de façon à optimiser les résultats du procédé, au moins une desdites étapes est effectuée au moins deux fois.

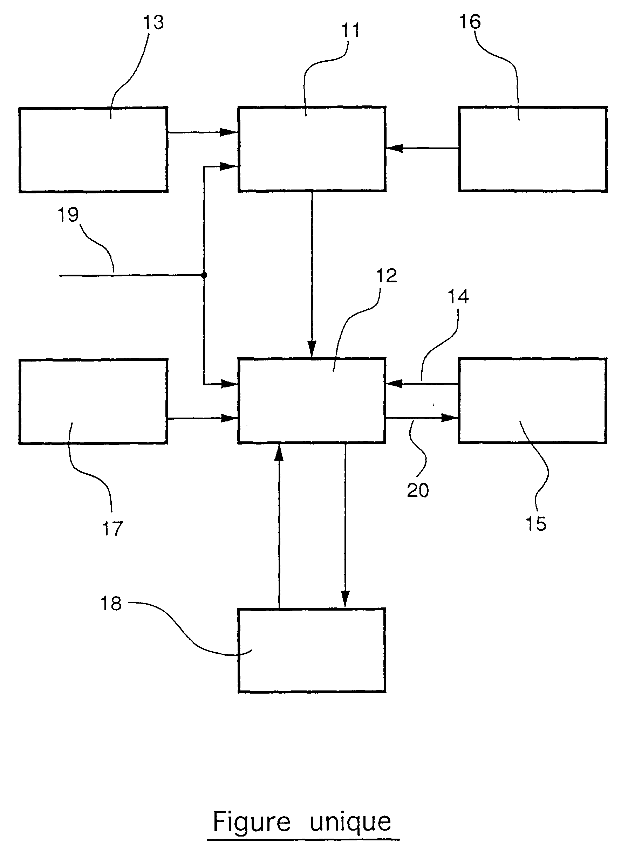

D'autres caractéristiques et avantages de l'invention apparaîtront à la lecture de la description suivante d'un mode de réalisation préférentiel de l'invention, donné à titre illustratif et non limitatif, et de la figure unique annexée, présentant sous forme d'organigramme le principe général du procédé selon l'invention.

L'exemple décrit ci-dessous en détail concerne la planification des réseaux cellulaires, de radiotéléphonie.

On sait en effet qu'une solution efficace au problème du nombre croissant d'abonnés au radiotéléphone est l'introduction d'un système de radio communication avec les mobiles à architecture cellulaire : le territoire à couvrir est découpé en zones ou secteurs appelés cellules (environ 500 pour la France).

Si l'urbanisation, l'industrialisation et l'importance du réseau routier d'une région justifient le nombre de cellules qui la composent, les formes et dimensions (de quelques unités à quelques dizaines de kilomètres) de celles-ci varient notamment en fonction :

- des conditions locales de propagation (dues notamment à l'urbanisation),
- des sites disponibles (immeubles PTT) ou obligés (points élevés) pour l'implantation des émetteurs,
- de l'influence parasite des émetteurs des zones avoisinantes,
- de l'usage par la base émettrice d'une antenne directionnelle.

Chaque cellule n'est desservie que par une station (émettrice) de base. Deux cellules contigües utilisent des fréquences différentes, mais la fréquence attribuée dans une cellule peut être réutilisée par exemple trois zones plus loin.

Si la forme exacte des cellules dépend étroitement des facteurs cités, il semble indispensable de pouvoir disposer d'un système interactif de tracé de cellules ou zones de couverture dans lesquelles la puissance reçue et/ou le rapport C/I (signal utile/signaux parasites) est supérieur à un niveau donné.

Dans le cadre de la planification des réseaux mobiles cellulaires, très différente de la planification des réseaux fixes, quatre types d'informations sont donc attendus, et forment le corps de l'ingénierie de ces réseaux :

- quelle est la zone de couverture (zone dans laquelle le champ reçu par un mobile est supérieur à un seuil donné) d'un émetteur donné?
- comment dimensionner l'émetteur en voies de trafic et de signalisation ?
- comment définir et mettre au point les algorithmes utilisés dans le réseau (algorithmes de transfert automatique intercellulaire et de resélection par exemple) ?
- comment définir les zones de localisation ?

L'invention propose un procédé d'implantation de l'infrastructure des réseaux apportant une solution optimisée à ces différentes questions, notamment en tenant compte de l'élasticité introduite par l'usage des algorithmes de transfert automatique intercellulaire et de resélection.

Avant de décrire le procédé de l'invention, on rappelle les caractéristiques essentielles des réseaux cellulaires.

RAPPELS

**1. Les fonctions des réseaux.**

Les fonctions assurées par un réseau cellulaire sont décrites dans les spécifications techniques dudit réseau. Cependant, il faut au moins considérer les fonctions suivantes communes aux divers réseaux.

.   gestion des ressources radio :

- transmission radio-électrique, selon l'un des critères de gestion des ressources radio électriques suivants :

- OACSU (off air call set up) : l'allocation du canal de trafic n'est faite qu'à l'issue de l'indication de décroché de l'appelé,
- HOACSU (half OACSU) : l'allocation du canal de trafic est faite à la réception de la demande d'appel ; la progression de l'appel est faite sans attendre l'allocation du canal trafic,
- NOACSU (no OACSU) : l'allocation du canal de trafic est faite à la réception de la demande d'appel; la progression de l'appel est suspendue tant que l'allocation du canal trafic n'est pas terminée.

- fonction d'accès au réseau par les mobiles,
- recherche de mobiles : elle consiste à demander à un mobile d'accéder aux ressources du réseau, la demande étant diffusée dans toutes les cellules d'une zone, dite de localisation, où se trouve le mobile,
- transfert automatique intercellulaire des ressources durant une communication (l'algorithme dépend du réseau),
- mise en file d'attente pour l'allocation d'une ressource,

.   gestion des mobiles :

- mise à jour de localisation : elle permet de déterminer selon leurs déplacements la liste des mobiles présents dans une zone de localisation. La procédure dépend du réseau,

.   gestion des appels :

- gestion des appels tenant compte des priorités (sortants/entrants, transfert intercellulaire sur demande de communication),
- gestion des appels entrants (à destination d'un mobile),
- gestion des appels sortants (demandé par un mobile).

**2. Les ressources.**

Les réseaux de radio-communications disposent d'une ressource physiquement limitée : une fraction du spectre des fréquences. Le concept cellulaire permet de réutiliser ces fréquences, sous certaines conditions, et donc d'augmenter la capacité et d'améliorer les performances du réseau.

La conception des réseaux de radio-communications avec les mobiles exigent qu'un certain nombre de fonctions soient réalisables (accès au système, suivi des mobiles, continuité des communications, échange de signalisations transparents pour les mobiles,...).

Chacune de ces fonctions est véhiculée par un canal radio. Les canaux logiques sont multiplexés sur un canal physique (porteuse à une fréquence, ou plusieurs tour à tour).

Chaque cellule dispose d'un ensemble de canaux qu'elle peut spécialiser en signalisation ou en phonie.

## 3. Activité des mobiles.

Un mobile peut être en sommeil ("station éteinte"), en veille ("station identifiée"), ou actif (en communication).

Un mobile en sommeil n'est pas repérable par le réseau (le résultat d'une recherche du mobile, toujours effectuée par le réseau, est négatif, mais consomme de la ressource de signalisation).

Un mobile en veille est suivi par le réseau (mise à jour de la localisation) et joignable en cas de communication entrante (recherche du mobile dans la zone de localisation qui l'a en charge).

Un mobile en communication n'est pas recherché par le réseau

Les changements d'états possibles sont : passage de sommeil à veille, passage de veille à actif, passage d'actif à veille, passage d'actif à sommeil. Le passage de sommeil à actif se fait via l'état de veille qui génère de la signalisation.

## 4. Propagation.

Les phénomènes physiques intervenant dans les communications avec des véhicules se déplaçant dans une zone urbanisée font que la puissance radioélectrique reçue par le mobile est soumise à des perturbations aléatoires (même si l'antenne émettrice émet à puissance constante sur une fréquence fixe) qui résultent de la combinaison de trois facteurs :

. les effets à petite échelle ou fluctuations rapides dites de Rayleigh: en deux points relativement proches (quelques longueur d'ondes) les variations de la puissance reçue sont très importantes et complètement décorrélées ; elles sont dues aux réflexions et aux trajets multiples des ondes,

. les effets à moyenne échelle ou variations lentes dues aux "masques": la moyenne du champ local sur une distance de 20 à 40 longueurs d'ondes élimine les fluctuations rapides, mais reste affecté de variations lentes dues aux masques environnants. Ces fluctuations du champ sont modélisées par une variable aléatoire le loi log-normale, ou par une loi normale si l'on s'exprime en décibels, de variance comprise entre 5 et 8 dB,

. les effets à grande échelle ou variations du champ moyen cellulaire: ces variations ne sont plus aléatoires, mais dépendent d'éléments disparates comme le degré d'urbanisme, la différence d'altitude fixe/mobile,...

## 5. Algorithmes de services.

Trois algorithmes sont mis en oeuvre pour assurer l'accessibilité et le suivi des services offerts par le réseau mobile à ses abonnés.

. Algorithme d'accès aléatoire :

La procédure d'accès au réseau par un mobile est du type à accès aléatoire crénelé. Cet algorithme est mis en oeuvre quand un mobile est demandeur d'une ressource radio, ou lorsque le mobile veut répondre à un message de recherche.

. Algorithme de resélection :

Le choix d'une cellule d'accueil dans le réseau, se fait par un algorithme de (re)sélection. Le mobile est ainsi localisé dans la cellule où la qualité d'une éventuelle communication est optimisée.

. Algorithme de transfert automatique intercellulaire :

Lorsqu'un mobile entre en communication, le suivi de la communication, aux changements de cellules, est assuré grâce à la mise en oeuvre d'un algorithme de transfert automatique intercellulaire. (Si les interférences sont trop élevées, le mobile peut également se voir allouer un nouveau canal trafic. On parle alors de transfert automatique intracellulaire).

Le but initial du transfert automatique intercellulaire (TAI), dans un réseau cellulaire proche de l'idéal, est de maintenir une communication dans les meilleures conditions de qualité, malgré le déplacement des mobiles dans les cellules du réseau

Les algorithmes réalisant la fonction de TAI peuvent être relativement complexes, mais les décisions de TAI sont prises à partir de mesures, faites par les mobiles et par les stations de base, décrivant plus ou moins précisément les conditions de propagation entre la station de base et le mobile, à l'instant des mesures. Les paramètres utilisés dans de tels algorithmes sont par exemple : le niveau de puissance reçue, le rapport C/I, distances du mobile à la station de base et aux stations adjacentes, les charges relatives en trafic des cellules adjacentes.

PROCEDE DE L'INVENTION

Le but principal de l'ingénierie des réseaux cellulaires de radio-communications avec les mobiles selon l'invention est de permettre une approche raisonnée de certaines questions techniques liées à la mobilité des abonnés et au trafic des cellules : avoir une connaissance fine de l'importance relative des divers paramètres caractéristiques du réseau, ainsi que de l'impact d'une modification de ces paramètres dans un objectif de contrôle et d'optimisation dans l'usage des ressources ; permettre par simulation du comportement des abonnés la prévision des besoins et le dimensionnement des cellules ; maîtriser l'élasticité induite par l'usage des algorithmes.

L'outil de planification de l'invention permet donc notamment de :

- calculer (par prédiction ou interpolation) et visualiser des couvertures, en particulier celles liées à la mobilité pour des TAI entrants/sortants de la cellule,
- décrire les flux de trafic entre cellules, zones de localisation, ...
- décrire les zones de localisation,
- décrire et simuler un algorithme de TAI pour en mesurer la pertinence,
- visualiser les lieux de TAI,
- dimensionner le réseau,
- simuler l'évolution du réseau dans le temps,
- simuler dynamiquement le système, en gérant des incidents liés à des cellules,
- visualiser ces données.

La caractéristique essentielle de l'invention est la prise en compte de l'élasticité des cellules, c'est-à-dire l'impact de la mobilité et des algorithmes sur la capacité en trafic ou la couverture radio-électrique.

En effet, vue d'un mobile, la couverture réelle d'une cellule diffère de sa couverture radio-électrique selon que le mobile y entre (couverture plus petite) ou en sort (couverture plus grande).

En d'autres termes, l'invention repose sur l'approche nouvelle du problème de l'implantation de l'infrastructure des réseaux cellulaires, consistant à considérer ces réseaux tels qu'ils sont vus par les mobiles (approche dynamique), et non plus, selon la méthode classique, tels qu'ils sont vus des stations de base de chaque cellule (approche statique).

La figure unique illustre, de façon simplifiée, les caractéristiques du procédé de l'invention. On décrit rapidement cette figure, avant de préciser des exemples de réalisation particuliers pour chacun des modules.

Ce procédé comprend deux étapes principales :

- détermination 11 de la couverture radio-électrique ;
- détermination 12 de la couverture réelle (prenant en compte l'élasticité des cellules).

La première étape 11 correspond partiellement (pour certaines étapes) aux méthodes connues. Elle prend en compte des mesures de champs 13, effectuées par exemple sur 30 % de la surface totale dont on veut connaître la couverture.

Ces mesures sont ensuite interpolées et/ou extrapolées selon au moins un modèle spécifique nouveau décrit par la suite.

Enfin, à l'aide d'un modèle probabiliste de propagation 16, on détermine la couverture globale. Par mixage des zones simulées (à l'aide du modèle de propagation) et interpolées, on obtient une trame générale cohérente de la couverture du réseau.

De façon avantageuse, le procédé dispose d'une pluralité de modèles de propagation, et le choix d'un modèle pour une zone de couverture est effectué, en fonction des mesures 13 réalisées, de façon à optimiser cette étape 11 de détermination.

Dans un second temps, on détermine (12) la couverture réelle du réseau. En prenant en compte (14) les différents algorithmes 15 (TAI, resélection,...), et en considérant le déplacement des mobiles, on peut en effet obtenir de façon plus précise une information sur la couverture réelle des cellules, et notamment sur les zones de recouvrement entre deux cellules.

On comprend en effet que le trafic qui se passe dans ces zones de recouvrement peut faire varier de façon importante la charge d'une cellule. Ainsi, si une route correspond sur une certaine distance à une zone de recouvrement, les mobiles resteront préférentiellement en liaison avec l'émetteur de la cellule dont ils sont issus (pour éviter d'incessants TAI). Il s'agit dans ce cas d'une extension de la couverture radio-électrique, due aux algorlithmes de transfert.

La couverture réelle, et donc le trafic offert est différente de la couverture radio-électrique déterminée par les procédés classiques. En tenant compte de ces algorithmes et de la mobilité des émetteurs/récepteurs, le procédé de l'invention permet de connaître de façon beaucoup plus précise et plus exacte la couverture réelle d'une cellule.

Il est également possible, selon l'invention, de repérer d'éventuelles zones de mauvaises réceptions, ou des zones où les TAI sont fréquents (par exemple dans le cas précité d'une route correspondant à une zone de recouvrements, et de modifier (20) les algorithmes en conséquence.

Cette étape 12 permet également de dimensionner les ressources de chaque cellule (en canaux de signalisation et canaux de phonie), en fonction de calculs de simulations déterminés à partir des algorithmes 15.

De façon à optimiser l'étape 12, le procédé prend avantageusement en compte des mesures de trafic 17, qui permettent de préciser le modèle statistique des déplacements utilisé.

L'invention prévoit également une étape 18 de modification d'une ou plusieurs caractéristiques du réseau. Ainsi, il est possible de disposer d'une connaissance fine de l'importance relative des divers paramètres caractéristiques du réseau, comme par exemple la puissance ou la capacité d'une cellule, d'évaluer l'impact d'une modification de ces paramètres dans un objectif de contrôle et d'optimisation dans l'usage des ressources, aussi bien que de réaliser une prévision orientée vers l'ingénierie.

Comme l'on sait procéder à des modifications de diagramme d'antenne, de puissance, d'azimut sur ces mesures faites sur les sites définitifs, la modification de l'ingénierie peut être évaluée en temps réel sans avoir à refaire de mesures de champs.

La mise au point système (réglage fin des paramètres des algorithmes) permet d'affiner le réseau du point de vue de la répartition de trafic en simulant des mobiles sur des axes routiers.

L'invention permet également de prendre en compte un certain nombre de contraintes imposées 19, telles que l'emplacement d'une antenne, ou une cellule déjà existante.

En cas de besoin, les procédures de simulation de couverture et de trafic peuvent être itérés.

On décrit ci-dessous plus en détail un mode de réalisation des différentes étapes de ce procédé, et notamment sept applications distinctes de l'invention, qui peuvent être utilisées indépendamment ou en combinaison, à savoir :

- application 1 : interpolation et extrapolation des mesures ;
- application 2 : prise en compte de la mobilité et simulation du trafic ;
- application 3 : simulation ;
- application 4 : définition des algorithmes de TAI ;
- application 5 : simulation sur une route ;
- application 6 : définition des zones de localisation ;
- application 7 : flux de trafic.

**1. Les mesures de champ.**

Les mesures de champ sont faites dans un double but : déterminer les coefficients du modèle probabiliste de propagation et obtenir la couverture réelle d'une cellule.

Dans le premier cas, les mesures sont faites à partir de sites de mesures installés en des endroits considérés comme représentatifs de l'environnement, le nombre de mesures de champ pouvant être limité.

Dans le second cas, les mesures sont faites à partir d'un site définitif, et le nombre de mesures doit être suffisamment important pour permettre une interprétation par interpolation.

Le protocole de mesure est le même quelque soit la destination des mesures.

Pour un site donné, on sélectionne les routes sur lesquelles seront faites les mesures. A partir de cartes, on digitalise les routes à suivre. Ensuite, le mobile de mesures se positionne sur la route au point référencé comme point de départ.

A chaque acquisition de mesures, les informations de distance cumulée parcourue sont enregistrées sur un fichier de mesures, en même temps que l'information relative au champ évaluée sur la distance parcourue.

La précision des coordonnées du point de mesure dépend du système (repérage par satellite, module embarqué du type gyroscope, base de données de calage,...). La précision sur les mesures de champ se détermine par application du théorème de la limite centrale et dépend donc du pas d'échantillonnage.

Pour l'ajustement de paramètres, les mesures doivent être prises à partir de sites de mesures les plus représentatifs de l'environnement final des sites.

Le nombre de mesures utilisées a bien sûr un impact sur les résultats. Pour une cellule, le nombre raisonnable de mesures est de 3 000 ou 4 000.

**2. Les mesures de trafic.**

Les mesures du trafic permettent d'estimer les zones géographiques demandeuses de trafic (mesures goniométriques), mais aussi, pour une cellule donnée, de connaître le comportement des abonnés du point de vue de la consommation en Erlangs et de la répartition du trafic vers les cellules voisines (mesures de trafic sur site).

En d'autres termes, comme pour les mesures de champ, celles-ci servent d'une part comme valeurs d'ajustement pour une simulation, d'autre part comme comparaison de la réalité avec les résultats de la simulation : la portée d'un modèle corroboré par la réalité pouvant justifier ensuite son usage dans une région sans mesures.

- Les mesures goniométriques :

A partir de trois sites munis d'antennes on procède à des repérages d'occupation du spectre dans la bande de fréquences utilisées par les mobiles. Chaque fois qu'une communication est repérée, on procède au relevé goniométrique du point émetteur. Lorsque les mesures sont faites, on poursuit l'observation de la bande de fréquence depuis la dernière fréquence étudiée. En bout de spectre, on boucle sur le début de la plage de fréquences.

On dispose alors de fichiers contenant les coordonnées des points de trafic.

- Les mesures de trafic sur site :

Ces mesures sont obtenues par le système d'observation du réseau. Elles donnent le trafic écoulé sur une plage horaire donnée, ainsi que d'autres statistiques sur le comportement des voies de trafic. Il est possible de disposer de la répartition du trafic vers les et en provenance des cellules voisines.

On peut également avantageusement compléter ces mesures par des mesures systèmes.

**3. Interpolation et extrapolation des mesures (application 1).**

Les mesures de champ sont dispersées sur des routes. Pour déterminer les zones de couverture associées, il faut connaître les mesures sur un réseau régulier (tous les 100m par exemple).

L'interpolation fournira une vue plus proche de la réalité, mais ne pourra être exécutée trop loin de points de mesures.

L'extrapolation si elle est bien définie permet de connaître la valeur du champ aussi loin que l'on veut dans la zone d'étude.

A titre d'exemples, on donne ici quatre exemples de méthodes d'interpolation/extrapolation pouvant être mis en oeuvre.

- Méthode 1

On détermine les quatre, trois ou deux points les plus proches d'un point du maillage, à l'intérieur d'un cercle de rayon donné. La valeur interpolée au point M vaut:

$$E_M = \frac{\dfrac{E_1}{d_1} + \dfrac{E_2}{d_2} + \dfrac{E_3}{d_3} + \dfrac{E_4}{d_4}}{\dfrac{1}{d_1} + \dfrac{1}{d_2} + \dfrac{1}{d_3} + \dfrac{1}{d_4}}$$

où $E_i$ est la valeur du champ au point numéro i (i = 1 à 4), à une distance $d_i$ du point de maillage M.

La valeur en un point du maillage est prise égale à la moyenne des valeurs se trouvant à l'intérieur d'un cercle de rayon donné, en cas de donnée denses.

- Méthode 2 :

L'interpolation se fait en plusieurs étapes :

1. les valeurs se trouvant à l'intérieur d'un cercle de rayon donné $R_1$ (typiquement $\sqrt{2}/2$ fois le coté le plus long du maillage, de façon à recouvrir le plan par des disques) ou à l'intérieur d'un pavé centré sur le point de maillage considéré, autour d'un point du maillage sont moyennées pour donner la valeur au point du maillage.
2. pour les points du maillage dont on ne connaît pas la valeur, on procède par interpolation à partir des valeurs des points de maillage connus (issus de l'étape 1) et se trouvant à l'intérieur d'un cercle de rayon $R_2$, et dans chacun des quatre quadrants autour du point à interpoler. Entre deux points A et B encadrant M, pour lesquels on a les valeurs des champs $E_A$ et $E_B$, on calcule le champ $E_M$ en M par:

$$E_M = E_A + \left[\frac{X_M - X_A}{X_B - X_A}\right] E_B$$

où $X_I$ désigne l'abcisse du point I.

On procède de même avec les autres points, et pour les ordonnées. Dans le meilleur des cas, on dispose de deux valeurs interpolées, dont on prend la moyenne.

Si l'on n'a qu'un point, ou si on a deux points mais dans des quadrants opposés on prend le point le plus proche.

- Méthode 3

Si on n'a qu'un point de mesure dans le cercle considéré, on interpole en déduisant, à partir de la valeur du champ $E_1$ situé à une distance $D_1$ de la station de base, la valeur de la constante CSTE telle que $E_1 = CSTE1 + \alpha \log_{10} D_1$, où $\alpha$ est un coefficient donné (-35.5 par défaut). On calcule alors la distance $D_2$ du point du maillage à la station de base, et on déduit $E_2 = CSTE_2 + \alpha \log_{10} D_2$.

Sinon, on dispose pour un a donné, de plusieurs valeurs de constantes : CSTE1, CSTE2, CSTE3, CSTE4,... On calcule alors la valeur moyenne de cette constante, soit CSTM, comme on calcule $E_i$ dans les modules 1 et 2, et le champ interpolé vaut :

$$E_M = CSTM + \alpha \log_{10} D_M,$$

où $D_M$ est la distance du point à la station de base.

- Méthode 4

Les points du maillage sont partitionnés en un nombre donné (NC) de classes. A la classe K est associé un modèle de champ du type :

$$E_k = CSTE_k - \alpha_k \log_{10} d$$

où $\alpha_k$ et $CSTE_k$ sont des constantes. Lors de l'interpollation/extrapolation, si un point du maillage appartient à la classe k, c'est le modèle associé qui détermine la valeur du champ reçu.

**4. Modèles de propagation.**

De nombreux modèles d'affaiblissement sont connus. Ils peuvent se classer en deux catérories selon qu'il y a ou non correction pour la diffraction due aux arêtes (ce qui induit une plus grande complexité dans l'algorithme de calcul).

La puissance reçue, en dB, en un point (x,y) par le mobile vaut :

$$P_r(x,y) = P_e - A(x,y) - J(\nu) - G(\rho) - H(\chi)$$

où $A(x,y)$ est l'affaiblissement simple, $J(\nu)$ la correction due aux arêtes minces, et $G(\rho)$ et $H(\chi)$ les corrections dues aux arêtes à sommet arrondi.

L'affaiblissement de la puissance en fonction de la distance d(x,y) du mobile à l'émetteur varie en $1/d^{\alpha}(x,y)$, ou $\alpha$ est compris entre 2 (en espace libre) et 4 (valeur maximale en zone urbaine).

Divers modèles sont proposés pour l'affaiblissement, tels que le modèle de l'espace libre, le modèle de la terre plate, les modèles synthétiques (Egli, Kozono/Watanabé, Damasso,...) ou le modèle d'Okumara/Hata.

De façon également connue, à un relief donné, on associe un paramètre, $\nu$, $\rho$ ou $\chi$, utilisé ensuite pour calculer l'affaiblissement supplémentaire à un affaiblissement simple.

On distingue les cas suivants :

- arête vive ;
- deux arêtes (méthode de Deygout ou d'Epstein-Peterson) ;
- trois arêtes et plus (modèles d'Edwards/Durkin et de Blomquist/Lade).

L'intérêt des modèles probabilistes de propagation est de permettre de faire de la prévision de couverture, sans avoir à faire des mesures de champs systématiques, coûteuses en moyens, hommes et matériel.

Des outils probabilistes permettent de déterminer la pertinence d'un modèle, et les coefficients du modèle probabiliste de propagation, pour l'adapter au mieux à la région étudiée. Pour cela, on choisit les paramètres que l'on désire prendre en compte, puis on écrit le modèle linéaire. Enfin, par comparaison avec des mesures de champs, on détermine, à l'aide de la statistique de Fisher-Smedecor les paramètres pertinents, et dans quelles proportions ces paramètres entrent enjeu.

Les modèles présentés peuvent être améliorés par prise en compte de nouveaux paramètres significatifs, ou plus simplement en adaptant les coefficients d'un modèle.

On peut ensuite par des méthodes de régression linéaire touver les valeurs des coefficients du modèle probabiliste de propagation étudié.

## 5. Prise en compte de la mobilité et simulation du trafic (application 2).

Selon une caractéristique essentielle de l'invention, la détermination des caractéristiques du réseau tient compte du déplacement des mobiles et du trafic.

Par simulation de la mobilité des abonnés, de leur consommation, et du réseau (zones de couverture, mise en oeuvre de TAI, état des cellules,...) on prédit le comportement du réseau et analyse ses performances. La maîtrise ainsi obtenue permet de faire face aux variations affectant le réseau, et surtout de s'affranchir de l'élasticité introduite dans l'ingénierie par la mise en oeuvre d'algorithmes.

Entre une approche pragmatique (hasardeuse) et une expérimentation (coûteuse), le procédé de l'invention est la solution la plus raisonnable, en rapport efficacité/coût.

Le but recherché est notamment d'obtenir le dimensionnement des stations (en termes de canaux de signalisation et de phonie). Il s'agit donc de simuler les diverses fonctions du réseau et d'en déduire la charge issue de chacune d'elles :

- accès aléatoire des mobiles,
- recherche des mobiles,
- localisation,
- signalisation pour les établissements d'appels,
- TAI,

en fonction de la gestion des communications (OACSU, NOACSU, HOACSU).

Dans ce but, la simulation tiendra compte de canaux fictifs : pour le canal de signalisation, on distinguera le canal EA d'établissement d'appels, le canal LOC de signalisation de localisation, et le canal MC de transfert des messages courts ; de même pour les canaux de trafic, on distinguera la canal TAI et le canal FRAIS pour pouvoir évaluer la proportion de canaux occupés par les TAI et ceux occupés par du trafic frais.

A titre d'exemple, on donne en annexe 1 un exemple de valeurs numériques pouvant être prises en compte pour décrire le comportement statistique et temporel des mobiles et pour modéliser un réseau type.

A partir des données sur le comportement du réseau et des abonnés mobiles, il est possible de calculer des occurences des événements considérés dans les statistiques en fonction de ces seuls paramètres (pourcentages), et d'une occurence fondamentale. On choisit par exemple la suivante :

$\lambda$ = occurence de communication sortante efficace (aboutissant à une sonnerie), par mobile, par seconde.

Les différentes occurences pouvant être déterminées à partir de cette valeur sont données en annexe 2.

Pour simplifier les notations, on désigne par $\lambda_k$ l'occurence d'un état, et $T_k$ la durée moyenne totale dans cet état, c'est-à-dire la durée moyenne dans cet état plus la durée de signalisation éventuelle. Si T est la durée totale de la simulation, le nombre moyen d'occurences de l'état k durant T vaut $\lambda_k T$. Le procédé de l'invention peut également délivrer les informations suivantes :

. Probabilité d'être dans un état k :

C'est le rapport du nombre de mobiles dans l'état k durant T et le nombre total de mobiles pendant T, soit NT.

EP 0 556 146 B1

Pour le cas des mobiles en veille ou en sommeil, on obtient simplement

$$p_k = \frac{N(\lambda_k T)\, T_k}{NT} = \lambda_k T_k$$

soit : PMS = $\lambda_{SOM}T_{SOM}$, et PMV = $\lambda_{VEI}T_{VEI}$ (où PMS : Probabilité que le mobile soit en sommeil et PMV : Probabilité que le mobile soit en veille).

Pour les mobiles en communication, il faut distinguer les divers cas. Avec la formule de la probabilité totale, nous trouvons, après simplifications par NT :

$$PMC = \sum_{k \neq SOM, VEI} \lambda_k T_k$$

où : PMC : Probabilité que le mobile soit en communication.
Cette formule permet de déterminer l'occurence fondamentale comme :

$$\lambda = \sum_{k \neq SOM, VEI} \lambda_k / \sum_{k \neq SOM, VEI} c_k = PMC / \sum_{k \neq SOM, VEI} c_k T_k$$

On désigne comme actif un mobile qui est soit en veille, soit en communication.

. Probabilité de passer à l'état k :

C'est le rapport du nombre d'occurences de l'état k durant T, sur le nombre total d'occurences. Après simplification par T :

$$P_k = \frac{\lambda_k}{\sum_j \lambda_j}$$

**6. Calcul des grandeurs liées aux événements.**

En utilisant des calculs de files d'attente et d'estimation relativement simples, on peut évaluer la charge des divers canaux de signalisation et de phonie.

. Service du trafic :

On considère une cellule avec C canaux et ayant une salle d'attente de taille N. Le service, de durée $1/\mu$, est distribué suivant une loi exponentielle de paramètre $\mu$.

Les paramètres fondamentaux d'une exploitation avec attente sont les probabilités de blocage, d'attente, d'attente plus d'un temps $t_0$ dans la salle d'attente du système, et le temps moyen $\bar{T}_a$ d'attente dans la file.
On détermine notamment, en posant le trafic égal à A :

a) probabilité d'avoir n canaux occupés dans la cellule :

$$p\,(n) = p\,(O)\, A^n/n\,!\ \text{si}\ O \le n \le C$$

$$p\,(n) = p\,(O)\, A^n / (C^{n-c}\,.\,C\,!)\ \text{si}\ C \le n \le C + N,$$

avec :

$$p(O) = \cfrac{1}{\displaystyle\sum_{k=O}^{C} \frac{A^k}{k!} + \sum_{k=C+1}^{C+N} \frac{Ak}{C^{k-c}C}}$$

ou bien : $\quad$ p (n) = pourcentage du temps de la simulation où n canaux de la cellule sont occupés.

Le nombre moyen de mobiles dans le système vaut :

$$m = \sum_{n=1}^{C+N} np(n)$$

b) probabilité de blocage : c'est la probabilité qu'un mobile arrivant dans le système trouve toutes les ressources occupées, et la salle d'attente pleine :

$$p_b = p(O) \frac{A^{C+N}}{C^N . C!}$$

ou bien : $\quad$ $p_b$ = pourcentage du temps de la simulation où toutes les ressources sont occupées.

Le nombre moyen de canaux occupés vaut :

$$b = \sum_{n=1}^{C} np(n) + \sum_{n=C+1}^{C+N} cp(n)$$

c) probabilité d'attente (probabilité qu'un mobile ait à attendre l'attribution d'un ressource) :

$$p_a = \sum_{k=C+1}^{C+N} p(k) = p(O) \frac{A^C}{C!} \left[ \frac{1 - \left[\frac{A}{C}\right]^N}{1 - \frac{A}{C}} \right]$$

ou bien : $\quad$ $p_a$ = pourcentage du temps de la simulation où un mobile attend une ressource.

. Fonction de mise à jour de localisation

Si la densité $\rho$ de mobiles est constante dans la région de calcul (cellule ou zone de localisation assimilée à des cercles), et si les vitesses des mobiles sont mutuellement indépendantes et sont de même loi de densité $f_v$ de moyenne V, avec des orientations uniformément distribuées, alors le taux de mobiles franchissant la frontière de longueur L de la région de surface S vaut (après intégration par rapport à la vitesse, à l'angle, et à la frontière) :

$$(\rho \, V \, L) / (\pi \, \rho S) = (V \, L) / (\pi \, S)$$

L'occurence, par mobile et par seconde, des mises à jour de localisation engendrées dans une zone de localisation ayant N cellules, par les mobiles actifs vaut alors :

$$\lambda_{LOC} = PMV \ (4V/(3 \ \sqrt{3} \ R)) \ (n+1/n)$$

ou bien, selon la formule donnée dans le document "Rapport final du Signalling Expert Group", Stockholm, avril 1987 :

$$\lambda_{LOC} = PMV \frac{V}{\pi}^2 \frac{\left[1 - \frac{N-1}{2N}\right]}{R}$$

où

$$L = 2\pi R (1 - \frac{N-1}{2N})$$

est une valeur semi-empirique précisant le périmètre de la zone de localisation contenant N cellules circulaires de rayon R. Dans le cas où les cellules sont hexagonales et inscrites dans un cercle de rayon R on choisira L = 65 (1 - (2n-1/3n)).

On peut également choisir $\lambda_{LOC}$ comme étant égal au nombre de mobiles faisant une mise à jour de localisation pendant la simulation divisé par le nombre moyen de mobiles actifs et la durée de la simulation, le nombre moyen de mobiles actifs étant égal à $\Sigma k$ * (% du temps où k mobiles sont actifs), k variant de 0 à nombre de mobiles simulés.

. Fonction de recherche des mobiles :

Si N est le nombre de cellules dans la zone de localisation, NPM est le nombre de messages de recherche de mobile, dans une cellule, par tentative d'appel entrant destiné à une station mobile se trouvant dans une autre cellule de la zone de localisation, F est le nombre maximum de messages de recherche par tentative d'appel entrant, et NMA le nombre moyen d'abonnés qu'il est possible de servir simultanément, alors l'occurence de recherche est la somme des trois configurations possibles et vaut :

$$\lambda_{PAC} = (\lambda_{AEC} + \lambda_{AEA}) \ ( \ (N - 1) \ NPM + (F - 1) \ PAEA + 1/ \ PMV$$

ou $\lambda_{PAC}$ = nombre de recherches durant la simulation / (nombre moyen de mobiles actifs $*$ durée de la simulation).

Le nombre moyen de recherche par intervalle de durée DS est :

$$\Lambda_{PAC} = NMA \ DS \ \lambda_{PAC}$$

**7. Simulation des couvertures radioélectriques.**

Une donnée essentielle pour la simulation des réseaux cellulaires est la simulation de la couverture radioélectrique de chaque cellule du réseau. A partir d'un modèle probabiliste de propagation, et des caractéristiques techniques d'une station, on sait calculer la puissance reçue en chaque point du maillage. L'ensemble des fichiers de puissances reçues associés aux stations, permet de calculer le rapport C/I de signal à interférence en tenant compte du filtre pour les stations qui ont des fréquences sur des canaux adjacents.

Avec ces fichiers on sait tracer les zones de couverture radio en fonction du critère C (puisssance reçue) ou C/I (puissance reçue/interférence), ou d'un critère combiné des deux. On a donc accès aux :

- cellules nominales sans contrôle de puissance d'émission,
- cellules nominales avec contrôle de la puissance d'émission,
- cellules nominales et zones de couverture,
- cellules nominales et zones de C/I,

- zones de couverture,
- zones de couverture et zones de C/I,
- zones de C/I.

**8. Simulation des couvertures liées à la mobilité.**

Le tracé de zones de couvertures réelles est défini comme étant fait sur la base de l'un des trois critères précédents, et d'au moins un critère supplémentaire. Ce critère peut être :

- le résultat du comportement d'un mobile dans la zone de couverture radio-électrique en fonction de l'algorithme de TAI,
- le décalage sur la couverture pour que le trafic écoulable soit inférieur à un seuil maximal, avec mesure de la variation de trafic résultant et de la variation de surface.

Pour le second critère, il s'agit de faire varier le seuil de réception, en répartissant le trafic uniformément sur la surface des cellules.

Pour le premier critère, la procédure est plus complexe :

- on se fixe un seuil de puissance reçue pour le déclenchement de l'algorithme de TAI, et on en déduit les points du maillage correspondant à la frontière délimitée par ce seuil.
- on déplace les mobiles d'une distance V∗TM, ou V est la vitesse moyenne des mobiles, et TM le temps moyen de mesure, en partant de chaque point de la frontière et selon la normale à celle-ci.
- au point d'arrivée du mobile, on connaît la puissance reçue à laquelle on rajoute éventuellement un bruit gaussien centré. Cette valeur est donnée en entrée de l'algorithme de TAI.
- Si le mobile change de cellule, on associe au point de sortie la cellule cible (pour évaluer la répartition du trafic sur les cellules adjacentes), et on passe au point suivant de la frontière. Sinon, on recalcule la normale à la courbe d'isopuissance correspondant à la position courante, et on reprend la procédure de calcul.

Une autre approche consiste encore à simuler des mobiles sur des routes, et à observer sur ces routes les lieux de TAI. Pour un ensemble de routes choisies, on peut ensuite par interpolation des lieux de sorties déterminer les couvertures réelles (entrantes ou sortantes) en fonction du sens de parcours des routes.

**9. Simulation du déplacement des mobiles.**

Les mobiles sont caractérisés par des points de départ, des lois de déplacement, et des vitesses.

- Les points de départ des mobiles sont obtenus par répartition aléatoire, ou bien sur la base des données de trafic en nombre de mobiles proportionnellement au trafic écoulé par les cellules, et en position uniformément sur les surfaces de celles-ci.
- Les vitesses sont tirées aléatoirement selon une loi choisie dans la bibliothèque de lois.
- Le modèle de déplacement des mobiles est soit une marche aléatoire : choix d'un angle d'orientation selon une loi et choix d'une longueur de déplacement selon une loi ; soit une loi de flux ou de reflux des mobiles dans la région : les mobiles se déplacent vers un point cible, ou en le fuyant ; soit un modèle empirique utilisant la base de données trafic.

**10. Lieu et durée des simulations.**

La présence de routes (seuls les périphériques, nationales et autoroutes sont considérés) induit une charge non négligeable pour les cellules qu'elles traversent. Ces routes doivent donc être traitées différemment car leurs caractéristiques sont différentes (vitesses des mobiles plus élevées, trajets "rectilignes",...). La simulation de mobiles sur routes, complémentaire des mobiles hors routes, ayant une vitesse de déplacement différente des mobiles hors routes est prise en compte.

La durée réelle de la simulation, le nombre de mobiles sur routes et le nombre de mobiles hors routes, sont des paramètres d'initialisations de l'application.

**11. Procédure de simulation (application 3).**

A partir des statistiques du réseau et du type de gestion des communications, on calcule à l'aide des formules du paragraphe 5 les occurences des $\lambda_k$ (hors veille et sommeil qui sont données). Celles-ci permettent de simuler l'activité des mobiles puis de déduire les trafics de phonie et signalisation.

Les mobiles sont initialisés en veille pour une durée pondérée d'un facteur u tiré uniformément entre 0,9 et 1, et dans des proportions respectant les pourcentages initiaux, de façon à éviter des signalisations massives.

Dans un premier temps, on effectue une simulation (mode statique) durant laquelle les caractéristiques techniques paramétrables des stations ne sont pas modifiées. On observe alors l'évolution libre du réseau face à la demande générée:

- Si le nombre de canaux est connu, on en déduit le trafic écoulé, le trafic écoulable et les probabilités de blocage et d'attente ;
- Si le nombre de canaux n'est pas connu, un jeu de conditions sur la probabilité de blocage (PBT), la probabilité d'attente (PAT), et la probabilité d'attente plus de TA secondes (PATAT) sur le canal de trafic, et sur la probabilité de blocage (PBS), la probabilité d'attente (PAS), et la probabilité d'attente plus de TA secondes (PATAS) sur le canal de signalisation, du type suivant :

$$PBT \leq CBT$$
$$PAT \leq CAT$$
$$PATAT \leq CATAT$$
$$at*PBT + bt*PAT + ct*PATAT \leq CT$$
$$PBS \leq CBS$$
$$PAS \leq CAS$$
$$PATAS \leq CATAS$$
$$as*PBS + bs*PAS + cs*PATAS \leq CS$$
$$a*PBT + b*PAT + c*PATAT + d*PBS + e*PAS + f*PATAS \leq CG$$

avec at, bt, ct, as, bs, cs, a, b, c, d, e, f, des coefficients valant 1 ou 0,
et CBT, CAT, CATAT, CT, CBS, CAS, CATAS, CS et CG étant des valeurs de contrainte comprises entre 0 et 1 et fixées par l'utilisateur, permet de déterminer le dimensionnement des canaux de trafic et signalisation, les longueurs de files d'attente, et le trafic utile. L'algorithme calcule les diverses probabilités, et minimise dans la recherche d'une solution le nombre de canaux par rapport à la taille des files d'attente.

Dans un second temps, on peut effectuer une simulation du réseau (mode dynamique) durant laquelle les cellules sont dimensionnées et les caractéristiques techniques paramétrables peuvent être modifiées selon les deux critères de contrôle de puissance d'émission et de taux de charge en trafic des stations de bases. On observe ainsi l'évolution du réseau sous contraintes, et l'effet d'un paramètre désigné sur le réseau et sa conséquence sur la gestion des ressources.

En prenant des statistiques correspondant à une estimation du comportement d'un réseau à une date à venir, la simulation telle que décrite dans les paragraphes précédents permet de faire la prédiction de trafic.

## 12. Définition des algorithmes de TAI (application 4).

La procédure de description des algorithmes permet de simuler des familles d'algorithmes complexes mis en oeuvre dans le réseau, de façon à sélectionner le plus efficace.

Les paramètres X à superviser lors de la simulation sont choisis parmi les cinq critères :

C = champ reçu par le mobile,
D = distance du mobile à la station,
T = taux de charge du trafic de la station,
I = rapport C/I associé à la station au point ou se trouve le mobile,
F = fonction à configurer comme décrit ci-dessous.

bruit gaussien.

Un bruit gaussien de moyenne $m_X$ et d'écart-type $\sigma_X$ peut être avantageusement ajouté aux valeurs X considérées.

délai de réponse du réseau.

Pour une plus grande précision de simulation, on peut appliquer un TAI avec un délai de retard délai_TAI, délai_TAI représentant le temps de traitement du réseau.

délai de garde.

Pour éviter les TAI répétées, si un TAI a été exécuté à t0, un second TAI ne peut avoir lieu avant t0 + garde_TAI. L'algorithme à dérouler pour exécuter un TAI se paramètre de la façon suivante (chaque cellule possède ses propres jeux de valeurs des paramètres de comparaison considérés ci-dessous) :

étape 1 : configuration de F.

a) choix de la variable x (C, D, T ou I) dont dépend F,
b) description de F avec NV valeurs $(S_i, V_i)$ à fixer, indiquant que si x appartient à $[S_i, S_{i+1}]$ alors F(x) vaut $V_i$.

étape 2 : critère de déclenchement de l'algorithme.

Cette étape correspond à un OU logique : il y a déclenchement d'une demande de TAI dès que l'un des paramètres X vérifie son critère. Ce critère peut être "toujours", ou "si X de la station courante SC dépasse un seuil SD(X,SC)".

Si un paramètre X est la cause d'un déclenchement, la variable CAUSE_X associée prend une valeur donnée (mais modifiable). La valeur de CAUSE_X pour les autres paramètres est zéro. La valeur de cette variable permet de favoriser le TAI sur des cellules présentant une meilleure valeur du paramètre X ayant causé le TAI.

étape 3 : filtrage des cellules cibles.

Cette étape permet de sélectionner les cellules susceptibles de recevoir le mobile. Soit le critère "aucun" est appliqué, et toutes les cellules sont sélectionnées, soit on ne garde que celles SV vérifiant une inéquation portant sur X(SV), un seuil d'accessibilité SA (X,SC,SV), une hystérésis HO(SC,SV), CAUSE X et un terme correctif des puissances d'émission des mobiles autorisées dans les cellules SC et SV.

étape 4 : sélection finale.

La cellule sélectionnée parmi les cellules voisines SV, est celle qui présente le meilleur champ parmi les cellules retenues.

Pour chaque critère X supervisé, on définit NOC(X) qui est le numéro de priorité, ou d'application, de ce critère, et NBS(X) qui représente le nombre de stations retenues à l'issue de l'application du critère X.

Les cellules sont retenues en appliquant la règle ci-dessous :
pour NOC = 1 à 5

choisir le critère X tel que NOC(X) = NOC,
appliquer l'inéquation définie en étape 3,
parmi les stations vérifiant les inéquations retenir les NBS(X) présentant le meilleur champ,

fin de boucle.

## 13. Simulation sur une route (application 5).

Une fois l'algorithme configuré, et un ensemble de routes sélectionné, on peut simuler le déplacement d'un mobile (on fixe sa vitesse) sur cette route. Le mobile est en communication permanente, la cadence d'analyse peut être fixée.

On peut visualiser les lieux des TAI. Par exemple, le mobile colorie la route sur laquelle il se déplace avec la couleur de la cellule qui le sert.

Une sortie sous forme de graphique permet de visualiser la variation du champ reçu (ordonnée en dBm) le long de la route parcourue (abscisse en km).

## 14. Définition des zones de localisation (application 6).

La détermination de zones de localisation permet de minimiser le trafic de signalisation dû aux recherches de mobiles pour les communications entrantes, lequel augmente avec le nombre de cellules dans la zone de localisation, et de minimiser le trafic dû aux mises à jour de localisation (inscription des mobiles lors des changements de zones de localisation), lequel diminue lorsque le nombre de cellules augmente

Pour un ensemble de cellules choisi, les zones de localisation sont déterminées de façon à minimiser une fonction associée aux trafics de recherche et de mise à jour de localisation.

La procédure de recherche d'une solution peut avantageusement être accélérée par indication des paramètres suivants :

- nombre minimum de cellules par zones de localisation,
- nombre maximum de cellules par zone de localisation,
- nombre minimum de zone de localisation,
- nombre maximum de zone de localisation,
- groupes de cellules appartenant à la même zone de localisation,
- une cellule d'une zone de localisation est nécessairement dans la liste des cellules voisines d'une cellule de cette zone (on évite ainsi des zones de localisation non connexes).

Pour des algorithmes configurés, pour un ensemble de zones de localisation donné, une simulation est exécutée. La solution optimale, au sens décrit dans ce paragraphe, prenant en compte les caractéristiques du réseau est alors déterminée.

### 15. Flux de trafic (application 7).

Pour déterminer quel est le flux du trafic (de TAI ou de mise à jour de localisation), il est possible, outre une simulation standard, de procéder comme suit:

Un mobile en communication constante (flux des trafics de TAI), ou en veille constante (flux des mises à jour de localisation) est déplacé N fois sur un parcours passant par toutes les mailles de discrétisation du champ.

La zone étudiée étant rectangulaire, le parcours démarre d'un coin, et suit toutes les mailles : horizontalement, puis verticalement, puis selon une diagonale, puis selon l'autre diagonale.

Les changements de cellules sont comptabilisés, et les flux sont connus.

## ANNEXE 1

```
****************************************************************
* not. * Définition                              * val. *
****************************************************************
* PMS  * % mobiles en sommeil                    * 0,400*
* PMV  * % mobiles en veille                     * 0,575*
* PMC  * % mobiles en com.                       * 0,025*
* PMS + PMV + PMA = 1                                    *
****************************************************************
* PASE * ratio appels sortants avec com./appels com. * 0,80 *
* PASC * % appels sortants aboutissant à une com.     * 0,70 *
* PASM * % appels sortants sans réponse              * 0,20 *
* PASO * % appels sortants occupés                   * 0,10 *
* PASC + PASM + PASO = 1                                    *
*--------------------------------------------------------------*
* PAEE * ratio appels entrants avec com./appels com. * 0,20 *
* PAEC * % appels entrants aboutissant à une com.     * 0,55 *
* PAEM * % appels entrants sans réponse              * 0,05 *
* PAEA * % appels entrants sans atteinte de l'appelé * 0,40 *
* PAEC + PAEM + PAEA = 1                                    *
* PASE + PAEE = 1                                           *
****************************************************************
* PCPH * % communications phonie                     * 0,90 *
* PCSL * % communications sortantes longues          * 0,20 *
* PCSM * % communications sortantes moyennes         * 0,70 *
* PCSC * % communications sortantes courtes          * 0,10 *
* PCEL * % communications entrantes longues          * 0,30 *
* PCEM * % communications entrantes moyennes         * 0,60 *
* PCEC * % communications entrantes courtes          * 0,10 *
*--------------------------------------------------------------*
* PCTD * % communications de transmissions données   * 0,05 *
* PTSL * % trans. données sortantes longues          * 0,30 *
* PTSM * % trans. données sortantes moyennes         * 0,50 *
* PTSC * % trans. données sortantes courtes          * 0,20 *
* PTEL * % trans. données entrantes longues          * 0,30 *
```

```
* PTEM * % trans. données entrantes moyennes          * 0,50 *
* PTEC * % trans. données entrantes courtes           * 0,20 *
*-------------------------------------------------------------*
* PCMC * % communications pour messages courts        * 0,05 *
* PCPH + PCTD + PCMC = 1                                      *
***************************************************************
***************************************************************
* TLOC * temps d'une mise à jour de localisation      * 003s *
* TTAI * temps de réalisation d'un TAI                 * 015s *
* SAO  * durée de sonnerie pour les appels occupés     * 000s *
***************************************************************
* TPAF * temps propagation des appels dans le fixe     * 015s *
* SASC * durée de sonnerie pour PASC                   * 015s *
* SASM * durée de sonnerie pour PASM                   * 030s *
* TSAS * temps signalisation appels sortants           * 3  s *
*-------------------------------------------------------------*
* SAEC * durée de sonnerie pour PAEC                   * 005s *
* SAEM * durée de sonnerie pour PAEM                   * 030s *
* TSAE * temps signalisation appels entrants           * 4  s *
***************************************************************
* TATC * temps d'attente d'un TCH                      * 001s *
* DCSL * durée moyenne des coms sortants longues       * 180s *
* DCSM * durée moyenne des coms sortants moyennes      * 120s *
* DCSC * durée moyenne des coms sortantes courtes      * 060s *
* DCEL * durée moyenne des coms entrantes longues      * 240s *
* DCEM * durée moyenne des coms entrantes moyennes     * 180s *
* DCEC * durée moyenne des coms entrantes courtes      * 120s *
*-------------------------------------------------------------*
* STD  * durée de sonnerie pour la trans. don.    .    * 002s *
* DTSL * durée moyenne trans. don. sortantes longues * 090s *
* DTSM * durée moyenne trans. don. sortantes moyennes* 060s *
* DTSC * durée moyenne trans. don. sortantes courtes * 030s *
* DTEL * durée moyenne trans. don. entrantes longues * 090s *
* DTEM * durée moyenne trans. don. entrantes moyennes* 060s *
* DTEC * durée moyenne trans. don. entrantes courtes * 030s *
* SMC  * durée de sonnerie message court               * 000s *
* DCMC * durée moyenne messages courts                 * 001s *
***************************************************************
* DSOM * durée moyenne de sommeil                     *1500s *
* DVEI * durée moyenne de veille                      *2000s *
***************************************************************
```

ANNEXE 2

• <u>Occurrence appel sortant aboutissant à une com.:</u>
$$\lambda_{ASC} = \text{PASC } \lambda$$

  - occurrence de communication de type phonie longue:
$$\lambda_{CSL} = \text{PCPH PCSL } \lambda_{ASC}$$

  - occurrence de communication de type phonie moyenne:
$$\lambda_{CSM} = \text{PCPH PCSM } \lambda_{ASC}$$

  - occurrence de communication de type phonie courte:
$$\lambda_{CSC} = \text{PCPH PCSC } \lambda_{ASC}$$

  - occurrence de communication de type transmission de données longue:
$$\lambda_{TSL} = \text{PCTD PTSL } \lambda_{ASC}$$

  - occurrence de communication de type transmission de données moyenne:
$$\lambda_{TSM} = \text{PCTD PTSM } \lambda_{ASC}$$

  - occurrence de communication de type transmission de données courte:
$$\lambda_{TSC} = \text{PCTD PTSC } \lambda_{ASC}$$

  - occurrence de communication de type message court:
$$\lambda_{CMC} = \text{PCMC } \lambda_{ASC}$$

• <u>Occurence appel sortant sans réponse:</u>
$$\lambda_{ASM} = \text{PASM } \lambda$$

• <u>Occurrence appel sortant occupé:</u>

$$\lambda_{ASO} = PASO\ \lambda$$

• <u>Occurrence appel entrant aboutissant à une com.:</u>

$$\lambda_{AEC} = \frac{PASC\ PAEE}{PASE}\ \lambda$$

- occurrence de communication de type phonie longue:

$$\lambda_{CSL} = PCPH\ PCSL\ \lambda_{AEC}$$

- occurrence de communication de type phonie moyenne:

$$\lambda_{CSM} = PCPH\ PCSM\ \lambda_{AEC}$$

- occurrence de communication de type phonie courte:

$$\lambda_{CSC} = PCPH\ PCSC\ \lambda_{AEC}$$

- occurrence de communication de type transmission de données longue:

$$\lambda_{TSL} = PCTD\ PTSL\ \lambda_{AEC}$$

- occurrence de communication de type transmission de données moyenne:

$$\lambda_{TSM} = PCTD\ PTSM\ \lambda_{AEC}$$

- occurrence de communication de type transmission de données courte:

$$\lambda_{TSC} = PCTD\ PTSC\ \lambda_{AEC}$$

- occurrence de communication de type message court:

$$\lambda_{CMC} = PCMC\ \lambda_{AEC}$$

• <u>Occurrence appel entrant sans atteinte de l'appelé:</u>

$$\lambda_{AEA} = PAEA \left(\frac{PASC\ PAEE}{PASE\ PAEC}\right)\ \lambda$$

• <u>Occurrence appel entrant sans réponse:</u>

$$\lambda_{AEM} = PAEM \left(\frac{PASC\ PAEE}{PASE\ PAEC}\right)\ \lambda$$

## EP 0 556 146 B1

**Revendications**

1. Procédé d'implantation de l'infrastructure d'un réseau cellulaire de communication avec des mobiles, réseau du type constitué d'une pluralité d'émetteurs de diffusion diffusant chacun sur une cellule propre de diffusion, au moins certaines des cellules étant adjacentes et présentant des zones communes de recouvrement,

   un système de gestion du réseau attribuant à un mobile donné une unique cellule de diffusion à un instant donné, selon une méthode (15) donnée d'attribution d'émetteur de diffusion,
   procédé comprenant, pour chacun desdits émetteurs, une étape d'estimation (11) de la couverture radio-électrique dudit émetteur,

   caractérisé en ce qu'il comprend de plus les étapes suivantes :

   - détermination (12) de la couverture réelle dudit émetteur, comprenant les étapes suivantes :

      - simulation des déplacements de mobiles dans lesdites cellules ;
      - détermination des emplacements des transferts d'une cellule à une cellule voisine, en appliquant pour chacun desdits mobiles en déplacement ladite méthode (15) d'attribution d'émetteur ;
      - modification de ladite couverture radio-électrique, en fonction desdits emplacements de transfert, pour obtenir ladite couverture réelle ;

   - affectation audit émetteur de ressources de transmission, en fonction de ladite couverture réelle.

2. Procédé selon la revendication 1, caractérisé en ce qu'il comprend de plus une étape (18) de modification d'au moins une des caractéristiques techniques dudit émetteur, et en ce que lesdites étapes d'estimation de la couverture radio-électrique, de détermination de la couverture réelle et d' affectation de ressources de transmission sont répétées après la mise en oeuvre de ladite étape de modification.

3. Procédé selon la revendication 2, caractérisé en ce qu'il comprend une étape de détermination de zones de localisation, une zone de localisation comprenant au moins deux cellules.

4. Procédé selon l'une quelconque des revendications 1 à 3, caractérisé en ce que ladite méthode (15) d'attribution de cellules comprend les deux opérations suivantes :

   - transfert automatique intercellulaire, pour les mobiles en cours de communication et changeant de cellule de diffusion ;
   - resélection d'une cellule, pour les mobiles passant d'un état d'arrêt à un état de veille ou d'un état de veille à un état de communication, de façon à pouvoir émettre et/ou recevoir des informations.

5. Procédé selon l'une quelconque des revendications 1 à 4, caractérisé en ce que ladite étape de simulation des déplacements de mobiles prend en compte, pour chaque mobile, au moins certaines des informations suivantes :

   - point de départ dudit mobile ;
   - vitesse dudit mobile ;
   - loi de déplacement dudit mobile ;
   - direction dudit mobile ;
   - état du mobile.

6. Procédé selon la revendication 5, caractérisé en ce que ladite information d'état du mobile appartient au groupe comprenant les états :

   - en communication ;
   - en veille ;
   - hors veille (ou en sommeil).

7. Procédé selon l'une quelconque des revendications 1 à 6, caractérisé en ce que ladite étape de simulation des déplacements de mobiles prend en compte la position du mobile sur ou hors d'une voie de circulation, et/ou l'importance de ladite voie de circulation.

8. Procédé selon l'une quelconque des revendications 1 à 7, caractérisé en ce que ladite étape de simulation des déplacements de mobiles prend en compte une information de caractérisation géographique de la zone où s'effectue chacun desdits échanges de données.

9. Procédé selon l'une quelconque des revendications 1 à 8, caractérisé en ce que ladite étape (de simulation des déplacements de mobiles met en oeuvre au moins un modèle statistique de déplacement desdits mobiles dans lesdites cellules.

10. Procédé selon l'une quelconque des revendications 1 à 9, caractérisé en ce qu'il comprend de plus une étape (17) de mesures de trafic, informant ladite étape de simulation des déplacements de mobiles.

11. Procédé selon l'une quelconque des revendications 1 à 10, caractérisé en ce qu'il comprend de plus une étape de détermination des accidents de couverture dudit réseau.

12. Procédé selon la revendication 11, caractérisé en ce qu'il comprend une étape de modification (20) de ladite méthode (15) d'attribution de cellules, informée par ladite étape de détermination des accidents de couverture, de façon que lesdits accidents de couverture soient pris en compte lors de l'attribution de cellules.

13. Procédé selon l'une quelconque des revendications 4 à 12 caractérisé en ce qu'il comprend une étape de sélection d'un algorithme de transfert automatique intercellulaire, parmi au moins deux algorithmes de transfert automatique intercellulaire.

14. Procédé selon l'une quelconque ds revendications 3 à 13 caractérisé en ce que ladite étape de détermination de zones de localisation détermine lesdites zones de localisation de façon à minimiser le trafic de signalisation.

15. Procédé selon l'une quelconque des revendications 1 à 14, caractérisé en ce que ladite étape (11) de détermination de la couverture radio-électrique est précédée d'une étape (16) de détermination d'un modèle de propagation, prenant en compte des valeurs de champ radio-électrique mesurées et/ou estimées par calcul.

16. Procédé selon la revendication 15, caractérisé en ce que ladite étape (11) de détermination de la couverture radio-électrique comprend au moins une des opérations suivantes :

   - mesures (13) de champ radio-électrique ;
   - interpolation de la couverture radio-électrique à partir desdites mesures, sur les zones géographiques proches desdites mesures ;
   - extrapolation de ladite couverture radio-électrique à partir desdites mesures ;
   - choix d'un modèle de propagation parmi au moins deux modèles disponibles,

   et une opération de détermination de la couverture radio-électrique globale, à partir desdites mesures et/ou des interpolations et/ou desdites extrapolations réalisées et/ou du modèle de propagation choisi.

17. Procédé selon la revendication 16, caractérisé en ce que ladite opération de mesures (13) concerne au moins 30 % de ladite couverture globale.

18. Procédé selon l'une quelconque des revendications 15 à 17, caractérisé en ce que ladite étape de détermination d'un modèle de propagation pondère lesdites mesures, en fonction de leur représentativité au sens de la couverture radio-électrique.

19. Procédé selon l'une quelconque des revendications 16 à 18, caractérisé en ce que ladite étape d'interpolation et/ou ladite étape d'extrapolation comprend les étapes suivantes :

   - classement des mesures en au moins deux groupes ;
   - application d'un modèle d'interpolation distinct pour chacun desdits groupes.

20. Procédé selon la revendication 2, caractérisé en ce que lesdites caractéristiques techniques desdits émetteurs appartiennent au groupe comprenant:

   - diagramme d'antenne ;

- puissance ;
- azimut ;
- nombre et/ou valeur des fréquences d'émission ;
- nombre de canaux de service ;
- nombre de canaux de communication.

21. Procédé selon l'une quelconque des revendications 1 à 20, caractérisé en ce qu'il prend en compte au moins une des contraintes appartenant au groupe comprenant :

- situation prédéfinie d'un émetteur ;
- relief ;
- forme prédéfinie d'au moins une cellule.

22. Procédé selon l'une quelconque des revendications 1 à 21, caractérisé en ce qu'il comprend une étape d'affectation d'une ressource globale de transmission à chacune desdites cellules et/ou de découpage de la ressource globale de transmission affectée à chacune desdites cellules en canaux de signalisation et en canaux de trafic.

23. Procédé selon la revendication 22, caractérisé en ce que ladite étape d'affectation et/ou de découpage tient compte d'au moins une des contraintes appartenant au groupe comprenant la probabilité d'attente d'un canal disponible et la probabilité de blocage de ladite ressource.

24. Procédé selon l'une quelconque des revendications 1 à 23, caractérisé en ce qu'au moins une desdites étapes est effectuée au moins deux fois.

**Patentansprüche**

1. Verfahren zum Einrichten der Infrastruktur eines zellularen Kommunikationsnetzes mit Fahrzeugen, wobei das Netz aus einer Vielzahl von Sendern besteht, die jeweils über eine eigene Sendezelle senden, wobei mindestens einige der Zellen nebeneinander liegen und gemeinsame Überdeckungsbereiche aufweisen,

   wobei ein Verwaltungssystem des Netzes einem gegebenen Fahrzeuge eine einzige Sendezelle zu einem gegebenen Zeitpunkt zuordnet, gemäß einer gegebenen Methode (15) für die Zuordnung von Sendern, wobei das Verfahren für jeden dieser Sender eine Abschätzungsstufe (11) für die funkelektrische Abdeckung des erwähnten Senders umfaßt,

   gekennzeichnet durch die folgenden Schritte:

   - es wird die tatsächliche Abdeckung des erwähnten Senders bestimmt, mit den folgenden Schritten:

     - es wird die Ortsveränderung der Fahrzeuge innerhalb der Zellen simuliert;
     - es werden die Orte des Transfers von einer Zelle zu einer benachbarten bestimmt, wobei für jedes der Fahrzeuge die Methode (15) der Senderzuordnung angewandt wird;
     - es wird die funkelektrische Abdeckung als Funktion der genannten Transferorte geändert, um die tatsächliche Abdeckung zu erhalten;

   - es werden dem Sender Senderessourcen als Funktion der tatsächlichen Abdeckung zugeordnet.

2. Verfahren gemäß Anspruch 1,
   dadurch gekennzeichnet, daß es außerdem einen Schritt (18) zur Änderung mindestens einer technischen Eigenschaft des Senders umfaßt und daß die Abschätzungsschritte für die funkelektrische Abdeckung, für die Feststellung der tatsächlichen Abdeckung und für die Zuordnung der Übertragungskapazität nach Ausführung des Änderungsschrittes wiederholt werden.

3. Verfahren gemäß Anspruch 2,
   dadurch gekennzeichnet, daß es einen Schritt zur Feststellung von Lokalisierungsbereichen umfaßt, wobei ein Lokalisierungsbereich mindestens zwei Zellen umfaßt.

4. Verfahren gemäß einem der Ansprüche 1 bis 3,
dadurch gekennzeichnet, daß die Methode (15) für die Zuordnung von Zellen die zwei folgenden Operationen umfaßt:

- automatischer Transfer zwischen den Zellen während der Kommunikation für die Fahrzeuge, die von einer Zelle in die andere wechseln;
- erneute Selektion einer Zelle für die Fahrzeuge, die von einem Stillezustand in einen Wartezustand oder aus einem Wartezustand in einen Kommunikationszustand wechseln, um Informationen senden und/oder empfangen zu können.

5. Verfahren gemäß einem der Ansprüche 1 bis 4,
dadurch gekennzeichnet, daß der Schritt zur Simulation von Bewegungen der Fahrzeuge für jedes Fahrzeug mindestens einige der folgenden Informationen berücksichtigt:

- Ausgangspunkt des Fahrzeuges;
- Geschwindigkeit des Fahrzeuges;
- Bewegungsgesetz des Fahrzeuges;
- Richtung des Fahrzeuges;
- Zustand des Fahrzeuges.

6. Verfahren gemäß Anspruch 5,
dadurch gekennzeichnet, daß die Information bezüglich des Zustandes des Fahrzeuges zu der Gruppe gehört, welche folgende Zustände umfaßt:

- in Verbindung;
- im Wartezustand;
- außerhalb des Wartezustandes (oder stand-by).

7. Verfahren gemäß einem der Ansprüche 1 bis 6,
dadurch gekennzeichnet, daß der Bewegungssimulationsschritt die Position des Fahrzeuges auf oder außerhalb einer Straße und/oder die Wichtigkeit dieser Straße berücksichtigt.

8. Verfahren gemäß einem der Ansprüche 1 bis 7,
dadurch gekennzeichnet, daß der Bewegungssimulationsschritt eine Information der geographischen Charakterisierung des Gebietes berücksichtigt, in dem die Datenübertragungen stattfinden.

9. Verfahren gemäß einem der Ansprüche 1 bis 8,
dadurch gekennzeichnet, daß der Bewegungssimulationsschritt mindestens ein statistisches Modell für die Bewegung der Fahrzeuge in den Zellen anwendet.

10. Verfahren gemäß einem der Ansprüche 1 bis 9,
dadurch gekennzeichnet, daß er außerdem einen Schritt (17) für die Verkehrsmessung umfaßt, der den Bewegungssimulationsschritt informiert.

11. Verfahren gemäß einem der Ansprüche 1 bis 10,
dadurch gekennzeichnet, daß es außerdem einen Schritt zur Feststellung von Störfällen bei der Abdeckung des Netzes umfaßt.

12. Verfahren gemäß Anspruch 11,
dadurch gekennzeichnet, daß es einen Schritt zur Änderung (20) der Zellenzuordnungsmethode (15) umfaßt, wobei diese Methode Information aus dem Schritt zur Festlegung der Abdeckungsstörfälle erhält, um sicherzustellen, daß diese Abdeckungsstörfälle bei der Zellenzuordnung berücksichtigt werden.

13. Verfahren gemäß einem der Ansprüche 4 bis 12,
dadurch gekennzeichnet, daß es einen Schritt zur Auswahl eines Algorithmus für den automatischen Transfer zwischen Zellen umfaßt, unter mindestens zwei solcher Algorithmen für den automatischen Transfer zwischen Zellen.

**14.** Verfahren gemäß einem der Ansprüche 3 bis 13,
dadurch gekennzeichnet, daß der Schritt zur Festlegung von Lokalisierungsbereichen diese Bereiche so bestimmt, daß der Signalverkehr minimiert wird.

**15.** Verfahren gemäß einem der Ansprüche 1 bis 14,
dadurch gekennzeichnet, daß dem Schritt (11) zur Feststellung der funkelektrischen Abdeckung ein Schritt (16) zur Festlegung eines Fortpflanzungsmodells vorausgeht, der die Werte des gemessenen und/oder berechneten funkelektrischen Feldes berücksichtigt.

**16.** Verfahren gemäß Anspruch 15,
dadurch gekennzeichnet, daß der Schritt (11) zur Feststellung der funkelektrischen Abdeckung mindestens eine der folgenden Operationen umfaßt:

- Messungen (13) des funkelektrischen Feldes;
- Interpolation der funkelektrischen Abdeckung, ausgehend von diesen Messungen in den diesen Messungen benachbarten geographischen Zonen;
- Extrapolation dieser funkelektrischen Abdeckung, ausgehend von diesen Messungen;
- Auswahl eines Fortpflanzungsmodells unter mindestens zwei verfügbaren Modellen,

sowie eine Operation zur Bestimmung der globalen funkelektrischen Abdeckung, ausgehend von diesen Messungen und/oder von den ausgeführten Interpolationen und/oder Extrapolationen und/oder von dem gewählten Fortpflanzungsmodell.

**17.** Verfahren gemäß Anspruch 16,
dadurch gekennzeichnet, daß diese Meßoperation (13) mindestens 30 % der globalen Abdeckung betrifft.

**18.** Verfahren gemäß einem der Ansprüche 15 bis 17,
dadurch gekennzeichnet, daß der Schritt zur Feststellung eines Fortpflanzungsmodells die Messungen als Funktion ihrer Representativität im Sinne der funkelektrischen Abdeckung wichtet.

**19.** Verfahren gemäß einem der Ansprüche 16 bis 18,
dadurch gekennzeichnet, daß der Interpolationsschritt und/oder der Extrapolationsschritt die folgenden Schritte umfaßt:

- Klassifizierungen der Messungen in mindestens zwei Gruppen;
- Anwendung eines verschiedenen Interpolationsmodells für jede dieser Gruppen.

**20.** Verfahren gemäß Anspruch 2,
dadurch gekennzeichnet, daß die technischen Besonderheiten der Sender zu der Gruppe gehören, die umfaßt:

- Antennendiagramm;
- Leistung;
- Azimut;
- Zahl und/oder Wert der Sendefrequenzen;
- Zahl der Dienstkanäle;
- Zahl der Kommunikationskanäle.

**21.** Verfahren gemäß einem der Ansprüche 1 bis 20,
dadurch gekennzeichnet, daß es mindestens eine der Beschränkungen der folgenden Gruppe umfaßt:

- vorgegebene Situation eines Senders;
- Relief;
- vorgegebene Form von mindestens einer Zelle.

**22.** Verfahren gemäß einem der Ansprüche 1 bis 21,
dadurch gekennzeichnet, daß es einen Schritt zur Zuordnung einer globalen Senderessource zu jeder Zelle und/oder zur Aufteilung der globalen Senderessource umfaßt, die jeder Zelle zugeordnet ist, in Signalisierungskanälen und in Verkehrskanälen.

**23.** Verfahren gemäß Anspruch 22,
dadurch gekennzeichnet, daß der Schritt zur Zuordnung und/oder zur Aufteilung mindestens eine der Beschränkungen berücksichtigt, die der Gruppe angehören, welche die Wartewahrscheinlichkeit eines verfügbaren Kanals und die Blockierungswahrscheinlichkeit dieser Ressource umfassen.

**24.** Verfahren gemäß einem der Ansprüche 1 bis 23,
dadurch gekennzeichnet, daß mindestens einer der erwähnten Schritte mindestens zweimal ausgeführt wird.

## Claims

**1.** Method for laying the infrastructure of a cellular communications network with mobile units, the network being of the type constituted by a plurality of broadcasting transmitters, each transmitter broadcasting on its own broadcasting cell, at least some of the cells being adjacent and having common overlapping zones,

a system of management of the network assigning a single broadcasting cell to a given mobile unit at a given moment, according to a given method (15) for assigning a broadcasting transmitter,
the method comprising, for each of the said transmitters, a step (11) for estimating the radio coverage of the said transmitter,

characterized in that it moreover comprises the following steps:

- determination (12) of the actual coverage of the said transmitter, comprising the following steps:

- simulation of the movements of mobile units in the said cells;
- determination of the locations of the handovers from one cell to a neighbouring cell, by applying the said transmitter assigning method (15) for each of the said mobile units in motion;
- modification of the said radio coverage as a function of the said handover locations in order to obtain the said actual coverage;
- allotting of transmission resources to the said transmitter as a function of the said actual coverage.

**2.** Method according to Claim 1, characterized in that it moreover comprises a step (18) for modifying at least one of the technical characteristics of the said transmitter, and in that the said steps for estimating the radio coverage, for determining the actual coverage and for allotting transmission resources are repeated after implementing the said modifying step.

**3.** Method according to Claim 2, characterized in that it comprises a step for determining localization zones, one localization zone comprising at least two cells.

**4.** Method according to any one of Claims 1 to 3, characterized in that said method (15) for assigning cells comprises the following two operations:

- automatic inter-cell handover for mobile units that are in the process of communicating and changing their broadcasting cell;
- reselection of a cell for mobile units changing from an off state to a stand-by watch state or from a stand-by watch state to a communicating state, so as to enable transmission and/or reception of information elements.

**5.** Method according to any one of Claims 1 to 4, characterized in that said step for simulating the movements of mobile units takes account, for each mobile unit, of at least some of the following information elements:

- starting point of said mobile unit;
- speed of said mobile unit;
- law governing the movement of said mobile unit;
- direction of said mobile unit;
- state of the mobile unit.

**6.** Method according to Claim 5, characterized in that said information on the state of the mobile unit belongs to the group comprising the states:

- in communication mode;
- in stand-by watch mode;
- out of stand-by watch mode (or at rest).

7. Method according to any one of Claims 1 to 6, characterized in that said step for simulating the movement of mobile units takes account of the position of the mobile unit on or off a traffic route and/or the importance of said traffic route.

8. Method according to any one of Claims 1 to 7, characterized in that said step for simulating the movements takes account of an information element for the geographical characterization of the zone in which each of said exchanges of data takes place.

9. Method according to any one of Claims 1 to 8, characterized in that said step (for simulating the movements of mobile units) employs at least one statistical model of the movement of said mobile units in said cells.

10. Method according to any one of Claims 1 to 9, characterized in that it furthermore comprises a step (17) of traffic measurement, providing information for said step for simulating the movements of mobile units.

11. Method according to any one of Claims 1 to 10, characterized in that it furthermore comprises a step for determining gaps in the coverage of said network.

12. Method according to Claim 11, characterized in that it comprises a step for the modification (20) of said method (15) for assigning cells, information being provided by said step for determining gaps in coverage, so that said gaps in coverage are taken into account during the assigning of cells.

13. Method according to any one of Claims 4 to 12, characterized in that it comprises a step for selecting an automatic inter-cell handover algorithm from among at least two automatic inter-cell handover algorithms.

14. Method according to any one of Claims 3 to 13, characterized in that said step for determining localization zones determines said localization zones so as to minimize the signalling traffic.

15. Method according to any one of Claims 1 to 14, characterized in that said step (11) for determining the radio coverage is preceded by a step (16) for determining a propagation model, taking account of radioelectric field values measured and/or estimated by calculation.

16. Method according to Claim 15, characterized in that said step (11) for determining the radio coverage comprises at least one of the following operations:

- measurements (13) of radioelectric field;
- interpolation of the radio coverage from said measurements over geographical zones close to said measurements;
- extrapolation of said radio coverage from said measurements;
- choice of a propagation model from among at least two available models,

and an operation to determine the total radio coverage, on the basis of said measurements and/or interpolations and/or said extrapolations made and/or the propagation model chosen.

17. Method according to Claim 16, characterized in that said measurement operation (13) relates to at least 30% of said total coverage.

18. Method according to any one of Claims 15 to 17, characterized in that said step for determining a propagation model weights said measurements as a function of their representativity in terms of radio coverage.

19. Method according to any one of Claims 16 to 18, characterized in that said interpolation step and/or said extrapolation step comprises the following steps:

- classification of the measurements into at least two groups;
- application of a distinct interpolation model for each of said groups.

30

20. Method according to Claim 2, characterized in that said technical characteristics of said transmitters belong to the group comprising:

- antenna pattern;
- power;
- azimuth;
- number and/or value of the transmission frequencies;
- number of service channels;
- number of communication channels.

21. Method according to any one of Claims 1 to 20, characterized in that it takes account of at least one of the constraints belonging to the group comprising:

- predefined location of a transmitter;
- relief;
- predefined form of at least one cell.

22. Method according to any one of Claims 1 to 21, characterized in that it comprises a step for allotting a total transmission resource to each of said cells and/or for dividing the total transmission resource allotted to each of said cells into signalling channels and into traffic channels.

23. Method according to Claim 22, characterized in that said allotting and/or dividing step takes account of at least one of the constraints belonging to the group comprising the probability of waiting for an available channel and the probability of blocking of said resource.

24. Method according to any one of Claims 1 to 23, characterized in that at least one of said steps is performed at least twice.

Figure unique